# EUROPÄISCHE PATENTSCHRIFT

(11) **EP 0 323 589 B1**
(45) Veröffentlichungstag und Bekanntmachung des Hinweises auf die Patenterteilung: **02.06.1993**
(21) Anmeldenummer: 88120900.1
(22) Anmeldetag: 14.12.1988
(51) Int. Cl.: F16J 15/22, E04B 1/68

(54) **Dichtungselement**
Sealing element
Elément d'étanchéité

(30) Priorität: 04.01.1988 DE 8800023 U
(43) Veröffentlichungstag der Anmeldung: 12.07.1989
(73) Patentinhaber: Illbruck Production S.A., CH-2892 Courgenay (CH)
(72) Erfinder:
(74) Vertreter: Müller, Enno, Dipl.-Ing.

(56) Entgegenhaltungen:
- EP-A- 0 142 314
- EP-A- 0 229 951
- EP-A- 0 317 833
- DE-B- 2 737 774
- FR-A- 1 267 905
- US-A- 4 084 348

## Beschreibung

Die Erfindung betrifft ein Dichtungselement nach den Merkmalen des Oberbegriffes des Anspruches 1.

Ein solches Dichtungselement ist bspw. aus der EP-A-0 229 951 bekannt. Dieses Dichtungselement weist allerdings keine Umhüllung auf.

Weiter ist es aus der FR-A-1 267 905 bekannt, ein im Querschnitt kreisförmiges Schaumstoffelement mit einer Umhüllung zu umgeben. Dieses bekannte Schaumstoffelement ist allerdings nicht verzögert rückstellfähig. Über eine stirnseitige Ausbildung des bekannten Dichtungselementes ist der genannten Druckschrift nichts zu unternehmen.

Ausgehend von dem genannten Stand der Technik stellt sich der Erfindung daher das technische Problem, ein Dichtungselement anzugeben, das unter Ausnutzung der bekannt vorteilhaften verzögerten Rückstellfähigkeit von getränktem Schaumstoff eine verbesserte Dichtigkeit ergibt.

Diese Aufgabe ist durch die im Anspruch 1 angegebene Erfindung gelöst.

Erfindungsgemaß ist das Dichtungselement darauf abgestellt, daß das Schaumstoffelement eine im wesentlichen luftdichte Umhüllung aufweist, welche über die Länge des Dichtungselementes das Schaumstoffelement vollständig umgibt, wobei die Umhüllung an den Stirnsteiten einen Öffnungsbereich ausbildet, in welchem das Schaumstoffelement freigelegt ist. Das erfindungsgemäße Dichtungselement kann wie andere bekannte Dichtungselemente aus imprägniertem, verzögert rückstellfähigen Schaumstoff, im komprimierten Zustand in eine Dichtungsfuge eingebracht werden, worin es sich sodann zurückstellt und im zurückgestellten Zustand die Abdichtungsfunktion erfüllt. Aufgrund der Umhüllung ergibt sich, je nach Ausgestaltung des Öffnungsbereiches, des weiteren noch die überraschende Eigenschaft, daß die Rückstellung wesentlich verzögert erfolgt. Der offenzellige Schaumstoff saugt zur Auffüllung seiner Poren bei der Rückstellung Luft an, welche bei den erfindungsgemäßen Dichtungselement lediglich durch den Öffnungsbereich in der Umhüllung eintreten kann.

In Ausgestaltung der Erfindung ist vorgesehen, daß die Umhüllung aus einer Kunststoffolie gebildet ist, beispielsweise auf Polyäthylen-Basis. Die Umhüllung kann auch etwa aus einer PVC-Weichfolie bestehen. Besonders bevorzugt ist auch, daß die Umhüllung aus einer schrumpffähigen PVC-Folie besteht, die auf das Schaumstoffelement etwa aufgeschrumpft werden kann. Herstellungsmäßig kann aber auch so vorgegangen werden, daß die Umhüllung nach Aufbringen auf das Schaumstoffelement längsverschweißt wird. Besonders bevorzugt ist auch, daß die Umhüllung aus einem geschlossenzelligen Schaumstoffmaterial besteht. Bei dieser Ausgestaltung ist der Anlagebereich des Dichtungselementes in bekannt vorteilhafter Weise aus Schaumstoff gebildet, welcher Unebenheiten oder dergleichen durch Verformung ausgleichen kann. Der geschlossenzellige Schaumstoff ist jedoch im wesentlichen luftdicht, so daß auch bei dieser Ausgestaltung der Vorteil des Dichtungselementes höherer Dichtigkeit gegeben ist.

Eine weitere besondere Ausgestaltung betrifft die Formgebung des Schaumstoffelementes. Durch eine Formgebung, bei welcher das Schaumstoffelement - in zurückgestelltem Zustand - einen geringeren Querschnitt ausfüllt als die Umhüllung läßt sich erreichen, daß sich ausgehend von der Öffnung ein Freiraum durch das Dichtungselement erstreckt, über welchen beim Expandieren des Schaumstoffelementes ungehindert Luft nachströmen kann. Bei bis auf die Öffnung vollständiger Umhüllung des Schaumstoffelementes kann gleichwohl die Rückstellung in praktisch gleicher zeitlicher Verzögerung erfolgen wie bei Dichtungselementen aus getränktem offenzelligem Schaumstoff ohne Umhüllung.

Bevorzugt ist in diesem Zusammenhang, daß das Schaumstoffelement etwa einen rechteckigen Querschnitt aufweist. Die Querschnittsgestaltung der Umhüllung ist hierbei zunächst von ungeordneter Bedeutung. Auch wenn die Umhüllung beispielsweise im unbeeinflußten Zustand einen rechteckigen Querschnitt aufweist, ergeben sich im komprimierten Zustand seitliche Freiräume entlang dem Schaumstoffelement, über welche Luft in das Innere des Dichtungselements eindrängen kann. Besonders bevorzugt ist jedoch daß die unbeeinflußten Querschnitte des Schaumstoffelementes und der Umhüllung unterschiedlich sind. Beispielsweise kann die Umhüllung im unbeeinflußten Zustand einen kreisförmigen Querschnitt aufweisen, das Schaumstoffelement dagegen einen rechteckigen. Bei letzterer Ausgestaltung ergibt sich noch der Vorteil einer besonders hohen Flächenpressung im expandierten Zustand.

Die Gestaltung des Schaumstoffelementes und der Umhüllung kann insbesondere derart getroffen werden, daß im komprimierten Zustand zwischen der Umhüllung und dem Schaumstoffelement ein Freiraum gegeben ist und daß im eingebauten, expandierten Zustand des Dichtungelementes das Schaumstoffelement praktisch vollständig an der Innenfläche der Umhüllung anliegt. Aufgrund des Freiraumes ist eine praktisch ungehinderte Expansionsfähigkeit des Schaumstoffelementes gegeben. Im expandierten Zustand dagegen ist eine Exponierung des inneren Schaumstoffelementes nur noch an dem Öffnungsbereich bzw. den Öffnungsbereichen der Umhüllung gegeben.

Im übrigen ist es bevorzugt, daß bei einem derartigen Dichtungselement eine geringere Vorkomprimierung des verzögert rückstellfähigen Schaumstoffes erfolgt als bei bekannten Dichtungselementen, die lediglich aus getränktem offenzelligen und damit verzögert rückstellfähigem Schaumstoff bestehen. Es wird eine Vorkomprimierung auf etwa 50 % vorgenommen.

Nachstehend ist die Erfindung noch anhand der beigefügten Zeichnung im einzelnen erläutert, die jedoch lediglich ein Ausführungsbeispiel darstellt. Im einzelnen zeigt:
- Fig. 1: ein Dichtungselement mit einer Umhüllung aus geschlossenzelligen Schaumstoff mit einem inneren im wesentlichen rechteckigen Schaumstoffelement;
- Fig. 2: ein Dichtungselement gemäß Fig. 1, jedoch vorkomprimiert in Richtung der Breitseiten des im wesentlichen rechteckigen Schaumstoffelementes;
- Fig. 3: den Gegenstand gemäß Fig. 1 in rückgestelltem Zustand.

Dargestellt und beschrieben ist ein Dichtungselement 1, welches ein inneres Schaumstoffelement 2 aufweist, das aus offenzelligem Schaumstoff besteht und zufolge seiner Tränkung verzögert rückstellfähig ist. Das Schaumstoffelement 2 befindet sich in einer Umhüllung 3, welche über die Länge des Dichtungselementes 1 das Schaumstoffelement 2 vollständig umgibt. Die Stirnseiten 4 und 5 der Umhüllung 3 bilden jedoch jeweils einen Öffnungsbereich aus, in welchem das Schaumstoffelement 2 freigelegt ist.

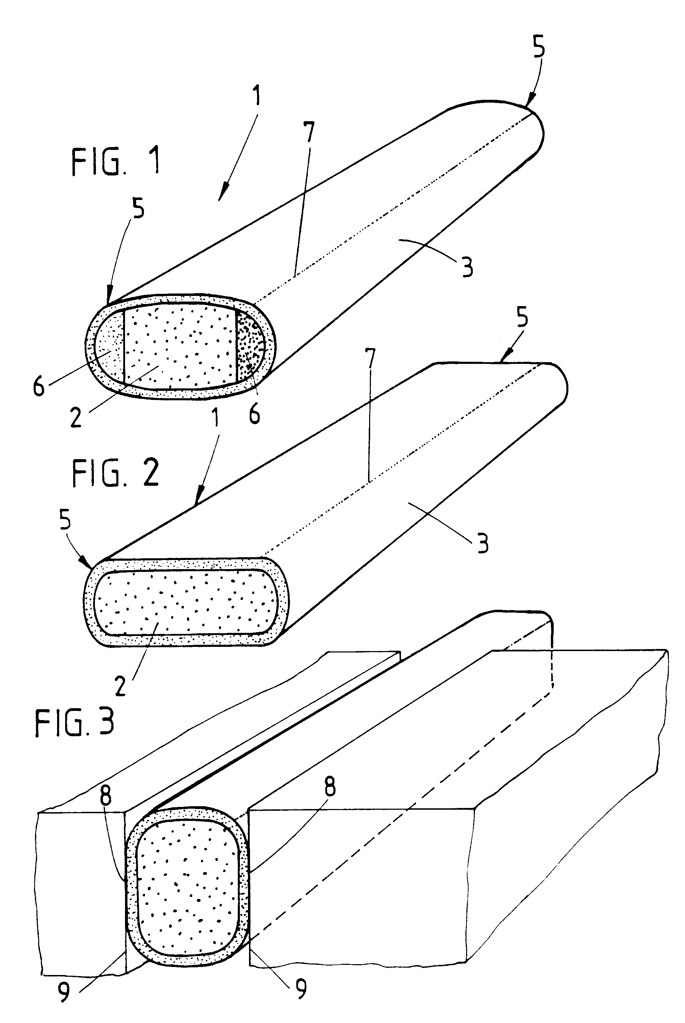

Die Umhüllung 3 besitzt im unbeeinflußten Zustand einen im wesentlichen kreisförmigen Querschnitt. Aufgrund des im wesentlichen rechteckigen Querschnittes des Schaumstoffelementes 2 ergeben sich, bei Komprimierung in Richtung der Schmalseiten des Schaumstoffelementes, wie aus Fig.1 ersichtlich, im komprimierten Zustand Freiräume 6, die sich entlang den beiden Flächen des Schaumstoffelementes 2 über die Länge des Dichtungselementes 1 erstrecken. Zufolge dieser Freiräume 6 kann das Dichtungselement 1 nach Einbau in eine Fuge oder dergleichen sich ungehindert verzögert zurückstellen.

Bei der Darstellung gemäß Fig. 2 ist das Schaumstoffelement 2 in Richtung seiner Breitseiten vorkomprimiert, so daß sich praktisch keine Freiräume ergeben. Die Rückstellung vollzieht sich hier entsprechend langsamer.

Die Umhüllung 3 ist aus einem Bandmaterial gebildet, welches längsverschweißt ist. Mit den Bezugszeichen 7 ist in Fig. 1 die Schweißnaht angedeutet.

In Fig. 3 ist das Dichtungselement gemäß Fig. 1 im expandierten Zustand dargestellt, eingesetzt in eine Fuge. Wie zu erkennen ist, ergeben sich im rückgestellten Zustand zwei Anlagebereiche 8 an Begrenzungswänden 9 einer Fuge oder dergleichen. Aufgrund der bei dem Ausführungsbeispiel rechteckigen Gestaltung des Schaumstoffelementes 2 ergibt sich auch eine relativ hohe Flächenpressung und damit hohe Dichtigkeit in den Anlagestellen 8. Da die Umhüllung 3 aus einem Mantel von geschlossenzelligem Schaumstoff besteht, ist die Fuge mit hoher Dichtigkeit verschlossen. Es ist zu erkennen, daß im expandierten Zustand, in Fig. 2, das Schaumstoffelement 2 an der Innenfläche der Umhüllung 3 anliegt, während im komprimierten Zustand, siehe Fig. 1, die erwähnten Freiräume ausgebildet sind.

## Patentansprüche

1. Dichtungselement (1), insbesondere zur Fugenabdichtung, mit einem zufolge Tränkung verzögert elastisch rückstellfähigen, langgestreckten Schaumstoffelement (2), dadurch gekennzeichnet, daß das Schaumstoffelement (2) eine im wesentlichen luftdichte Umhüllung (3) aufweist, welche über die Länge des Dichtungselementes (1) das Schaumstoffelement (2) vollständig umgibt, wobei die Umhüllung (3) an den Stirnseiten einen Öffnungsbereich (5) ausbildet, in welchem das Schaumstoffelement (2) freigelegt ist.

2. Dichtungselement (1) nach Anspruch 1, dadurch gekennzeichnet, daß die Umhüllung (3) aus einer Kunststoffolie gebildet ist.

3. Dichtungselement (1) nach Anspruch 1, dadurch gekennzeichnet, daß die Umhüllung (3) aus einem geschlossenzelligen Schaumstoffmaterial gebildet ist.

4. Dichtungselement (1) nach einem der Ansprüche 1 bis 3, dadurch gekennzeichnet, daß das Schaumstoffelement (2) in zurückgestelltem Zustand einen rechteckigen Querschnitt aufweist.

5. Dichtungselement (1) nach einem der Ansprüche 1 bis 4, dadurch gekennzeichnet, daß die unbeeinflußten Querschnitte des Schaumstoffelementes (2) und der Umhüllung (3) unterschiedlich sind.

6. Dichtungselement nach einem der Ansprüche 1 bis 5, dadurch gekennzeichnet, daß im komprimierten Zustand zwischen der Umhüllung (3) und dem Schaumstoffelement (2) ein Freiraum gegeben ist und daß im eingebauten, expandierten Zustand das Schaumstoffelement (2) praktisch vollständig an einer Innenfläche der Umhüllung (3) anliegt.

## Claims

1. Sealing element (1), in particular for joint sealing, with an elongate foam element (2) capable of elastic return after a time lag as a result of impregnation, characterised in that the foam element (2) comprises an essentially airtight envelope (3) which completely surrounds the foam element (2) over the length of the sealing element (1), wherein the envelope (3) at the end faces forms an opening region (5) in which the foam element (2) is exposed.

2. Sealing element (1) according to claim 1, characterised in that the envelope (3) is formed from a plastic sheet.

3. Sealing element (1) according to claim 1, characterised in that the envelope (3) is formed from a closed-cell foam material.

4. Sealing element (1) according to any of claims 1 to 3, characterised in that the foam element (2) in the returned state has a rectangular cross-section.

5. Sealing element (1) according to any of claims 1 to 4, characterised in that the uninfluenced cross-sections of the foam element (2) and of the envelope (3) are different.

6. Sealing element according to any of claims 1 to 5, characterised in that in the compressed state there is a free space between the envelope (3) and the foam element (2) and in that in the fitted, expanded state the foam element (2) is practically completely in contact with an inner surface of the envelope (3).

## Revendications

1. Elément d'étanchéité (1), en particulier pour étanchéifier des joints, avec un élément alvéolaire (2) allongé qui, suite à une imprégnation, peut reprendre avec retard et élastiquement sa forme initiale, caractérisé en ce que l'élément alvéolaire (2) présente une gaine (3) pratiquement étanche à l'air, entourant entièrement l'élément alvéolaire (2) sur la longueur de l'élément d'étanchéité (1), la gaine (3) formant sur les faces frontales une zone d'ouverture dans laquelle l'élément alvéolaire (2) est dégagé.

2. Elément d'étanchéité (1) selon la revendication 1, caractérisé en ce que la gaine (3) est formée d'une feuille en matière synthétique.

3. Elément d'étanchéité (1) selon la revendication 1, caractérisé en ce que la gaine (3) est formée d'un matériau alvéolaire à cellules fermées.

4. Elément d'étanchéité (1) selon l'une des revendications 1 à 3, caractérisé en ce qu'à l'état de retour à la forme initiale, l'élément alvéolaire (2) présente une section transversale rectangulaire.

5. Elément d'étanchéité (1) selon l'une des revendications 1 à 4, caractérisé en ce qu'à l'état non déformé, les sections transversales de l'élément alvéolaire (2) et de la gaine (3) sont différentes.

6. Elément d'étanchéité (1) selon l'une des revendications 1 à 5, caractérisé en ce qu'à l'état comprimé, un espace libre est formé entre la gaine (3) et l'élément alvéolaire (2) et qu'à l'état monté, une fois expansé, l'élément alvéolaire (2) appuie pratiquement sur la totalité de le surface intérieure de la gaine (3).
